# EUROPEAN PATENT APPLICATION

(11) **EP 2 131 529 A1**
(43) Date of publication of application: **09.12.2009**
(21) Application number: 08720570.4
(22) Date of filing: 24.03.2008
(51) Int. Cl.: H04L 12/28, H04N 7/173

(54) **BAND ALLOCATING METHOD**

(30) Priority: 30.03.2007 JP 2007091759
(71) Applicant: Panasonic Corporation, Kadoma-shi Osaka 571-8501 (JP)
(72) Inventor: TATSUTA, Akihiro, Osaka-shi, Osaka 540-6207 (JP); FUNABIKI, Makoto, Osaka-shi, Osaka 540-6207 (JP); OHUE, Hiroshi, Osaka-shi, Osaka 540-6207 (JP); SAKIMURA, Toshio, Osaka-shi, Osaka 540-6207 (JP)
(74) Representative: Eisenführ, Speiser & Partner
(86) International application number: PCT/JP2008/000691
(87) International publication number: WO 2008/129817

(57) **Abstract**

Upon measuring a packet round trip time RTT from a source device (10) to a sink device (30), the source device (10) requests a band management unit (37) of a network to allocate bands for round trip packets. The band management unit (37) notifies a reservation period Tsource for transmitting a packet from the source device (10) to the sink device (30) and a reservation period Tsink for sending back a packet from the sink device (30) to the source device (10), using a beacon signal. The reservation period Tsource is allocated within a time period starting from a middle timing of a time cycle Tbeacon of the beacon signal, and the reservation period Tsink is allocated at a middle timing between the reservation period Tsource and the beacon signal right after the reservation period Tsource.

## Description

### TECHNICAL FIELD

The present invention relates to a band allocation method for use in packet communication, and a communication system using the same method. In particular, the present invention relates to a band allocation method for use in packet communication, and a communication system using the same method, which are used to measure a packet round trip time RTT between a source device and a sink device of audio-visual devices (referred to as AV devices hereinafter) in a communication system for transmitting packet data of, for example, contents which are required to be copyrighted.

### BACKGROUND ART

Digital infrastructures (network infrastructures) have been constructed by using digital broadcasting, high-speed Internet and the like. At the same time, large-capacity recording media such as a DVD and a BD have been widespread. Therefore, anyone can easily obtain digital contents via the network without any deterioration. In this situation, copyright protection method is quite important. The application range of DTCP (Digital Transmission Content Protection) standard for protecting copyright of contents on the network has been particularly enlarged to IEEE1394, USB (Universal Serial Bus), MOST (Media Oriented Systems Transport), Bluetooth, and Internet Protocols (IP), and the number of products compliant with the DTCP has already increased. In DTCP-IP, any connection between an in-house network and an external network via a router is not permitted, and a range of connection between a source device transmitting content data and a sink device receiving the content data is restricted. Namely, a packet round trip time RTT between the source device and the sink device is measured, and only when the RTT is ranged within a restricted time period, the source device can transmit data to the sink device.

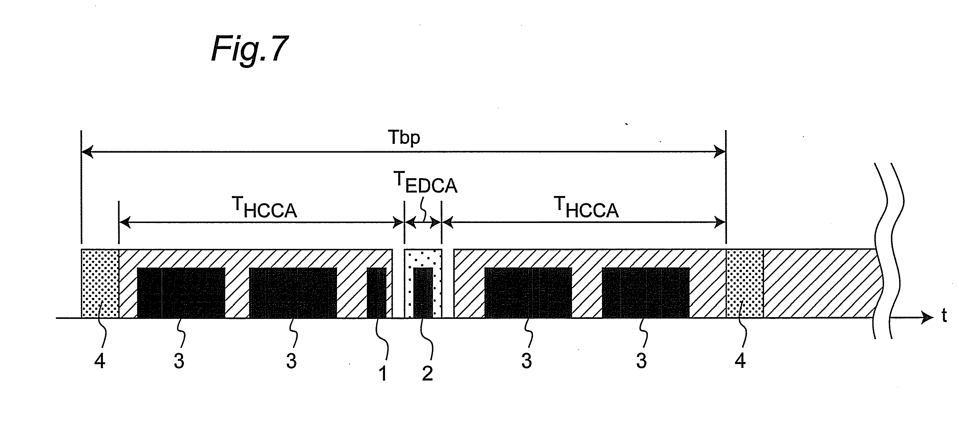

FIG. 7 is a timing chart showing a band allocation method for use in packet communication according to a prior art. Referring to FIG. 7, the band allocation method for use in the packet communication will be now described.

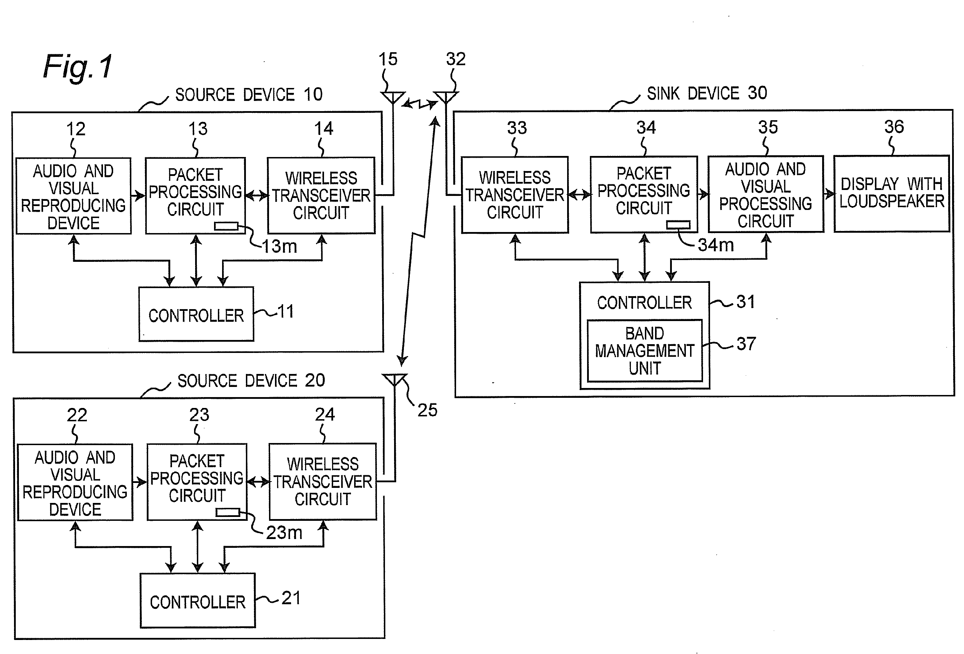

Referring to FIG. 7, 1 denotes an RTT measurement command signal transmitted from a source device to a sink device, 2 denotes an RTT response command signal sent back from the sink device to the source device, 3 denotes content data transmitted from the source device to the sink device, and 4 denotes a beacon signal transmitted from the sink device to the source device. In addition, Tbp denotes a polling time cycle, T_{HCCA} denotes a channel access period (referred to as an HCCA (HCF Controlled Channel Access) period hereinafter) controlled by an HCF (Hybrid Cooperation Function) for the source device, and T_{EDCA} denotes an Enhanced Distributed Channel Access period (referred to as an EDCA period hereinafter) of a contention period to which a plurality of source devices (terminal devices) can access.

There will be described an operation of the communication system operating according to the band allocation method for use in the packet communication of the prior art configured as mentioned above.

When the HCCA period T_{HCCA} required for transmitting the content data 3 from the source device to the sink device is allocated, the data transmission from other stations including the sink device is prohibited in this HCCA period T_{HCCA}. The source device transmits the RTT measurement command signal 1 to the sink device as a last frame in the HCCA period T_{HCCA}. After transmitting the RTT measurement command signal 1 as the last frame, the source device releases the HCCA period T_{HCCA}, and then the EDCA access period starts. In the EDCA period T_{EDCA}, for which every station can transmit data, the sink device acquires a transmission band and transmits the RTT response command signal 2 to the source device. In this case, since the EDCA period T_{EDCA} is a contention period for which a plurality of source devices (terminal devices) probabilistically retain transmission bands in the EDCA period T_{EDCA}, the sink device preferably transmits the RTT response command signal 2 in priority to the data from the other stations by, for example, setting a higher priority to the RTT response command signal.

A response time of the RTT response command signal 2 can be minimized by using this band allocation method for use in the packet communication. The band allocation method for use in the packet communication is disclosed in, for example, Patent Document 1 and Non-Patent Document 1.

Patent Document 1: Japanese patent laid-open publication No. JP-2006-270248-A.
Non-Patent Document 1: DTCP Volume 1, Supplement E, Mapping DTCP to IP, (Information Version), Hitachi, Ltd. et al., Revision 1.1, February 28, 2005.

### DISCLOSURE OF THE INVENTION

### PROBLEMS TO BE SOLVED BY THE INVENTION

However, the above mentioned band allocation method for use in the packet communication has the following problems. When the HCCA period T_{HCCA} for transmitting the content data from the source device to the sink device occupies a high proportion in an entire time period, namely, when bands cannot be sufficiently allocated to the other communications because of the streaming of the content data, it is not guaranteed that the RTT measurement command signal 1 and the RTT response command signal 2 can be outputted. Therefore, the response time of the packet round trip time RTT cannot be minimized.

It is an object of the present invention to provide a band allocation method for use in packet communication and a communication system using the method capable of solving the above-mentioned problems and minimizing the response time of packet round trip time RTT without any influence on the streaming of the content data, even when a communication band for transmitting the content data from a source device to a sink device occupies a high proportion in an entire band.

### MEANS FOR SOLVING THE PROBLEMS

According to a first aspect view of the present invention, there is provided a band allocation method for use in packet communication in a communication system for transmitting contents from a source device to a sink device in a form of packets, the contents being required to be copyrighted. When the source device measures a packet round trip time RTT from the source device to the sink device, the source device transmits a band allocation request signal for requesting allocation of bands for round trip packets to band management means of a network of the communication system. Using a beacon signal, the band management means of the network notifies a reservation period Tsource for transmitting a packet from the source device to the sink device and a reservation period Tsink for sending back a packet from the sink device to the source device. The band management means of the network allocates the reservation period Tsource within a predetermined first time period allocated within a time cycle Tbeacon of the beacon signal.

In the above-mentioned band allocation method for use in the packet communication, the predetermined first time period is a predetermined time period starting from a middle timing of the time cycle Tbeacon of the beacon signal.

In addition, in the above-mentioned band allocation method for use in the packet communication, the band management means of the network allocates the reservation period Tsink within one of the following:
(a) a predetermined second time period starting from a middle timing between the middle timing of the time cycle Tbeacon of the beacon signal and an end timing of the time cycle of the beacon signal;
(b) a predetermined third time period subsequent to the first time period; and
(c) a predetermined fourth time period at an end of a time period, which starts from the first time period and ends after a lapse of a maximum time of a time limit defined by a content protection standard.

Further, in the above-mentioned band allocation method for use in the packet communication, the band management means of the network allocates a contention period Trandom, for which a plurality of devices in the network can communicate freely with each other, within one of the following:
(a) a predetermined time period subsequent to the beacon signal;
(b) a predetermined fifth time period starting from a middle timing between the middle timing of the time cycle Tbeacon of the beacon signal and a start timing of the beacon signal; and
(c) the second time period within which the reservation period Tsource and the reservation period Tsink are not allocated.

Still further, in the above-mentioned band allocation method for use in the packet communication, when the bands for the round trip packets are not allocated, the band management means of the network allocates a contention period Trandom, for which a plurality of devices in the network can communicate freely with each other, within at least one of the reservation period Tsource and the reservation period Tsink.

According to a second aspect view of the present invention, there is provided a communication system for transmitting contents from a source device to a sink device in a form of packets, the contents being required to be copyrighted. When the source device measures a packet round trip time RTT from the source device to the sink device, the source device transmits a band allocation request signal for requesting allocation of bands for round trip packets to a band management means of a network of the communication system. Using a beacon signal, the band management means of the network notifies a reservation period Tsource for transmitting a packet from the source device to the sink device and a reservation period Tsink for sending back a packet from the sink device to the source device. The band management means of the network allocates the reservation period Tsource within a predetermined first time period within a time cycle Tbeacon of the beacon signal.

In the above-mentioned communication system, the predetermined first time period is a predetermined time period starting from a middle timing of the time cycle Tbeacon of the beacon signal.

In addition, in the above-mentioned communication system, the band management means of the network allocates the reservation period Tsink within one of the following:
(a) a predetermined second time period starting from a middle timing between the middle timing of the time cycle Tbeacon of the beacon signal and an end timing of the time cycle of the beacon signal;
(b) a predetermined third time period subsequent to the first time period; and
(c) a predetermined fourth time period at an end of a time period, which starts from the first time period and ends after a lapse of a maximum time of a time limit defined by a content protection standard.

Further, in the above-mentioned The communication system, the band management means of the network allocates a contention period Trandom, for which a plurality of devices in the network can communicate freely with each other, within one of the following:
(a) a predetermined time period subsequent to the beacon signal;
(b) a predetermined fifth time period starting from a middle timing between the middle timing of the time cycle Tbeacon of the beacon signal and a start timing of the beacon signal; and
(c) the second time period within which the reservation period Tsource and the reservation period Tsink are not allocated.

Still further, in the above-mentioned The communication system, when the bands for the round trip packets are not allocated, the band management means of the network allocates a contention period Trandom, for which a plurality of devices in the network can communicate freely with each other, within at least one of the reservation period Tsource and the reservation period Tsink.

### EFFECTS OF THE INVENTION

According to the band allocation method for use in the packet communication and the communication method using the same method according to the present invention, the reservation period Tsource for measuring the packet round trip time RTT is allocated within, for example, the predetermined time period from the middle timing of the time cycle Tbeacon of the beacon signal, and the reservation period Tsink is allocated at, for example, the middle timing between the reservation period Tsource and the beacon signal right after the reservation period Tsource. Therefore, even when a communication band for transmitting the content data from the source device to the sink device occupies a high proportion in the entire band, it is possible to lessen the influence on the streaming transmission of the content data and possible to reduce the RTT response time.

### BRIEF DESCRIPTION OF THE DRAWINGS

FIG. 1 is a block diagram showing a configuration of a wireless communication system for transmitting a wireless signal including AV stream data using a band allocation method for use in packet communication according to a first embodiment of the present invention.
FIG. 2 is a timing chart showing the band allocation method for use in the packet communication according to the first embodiment.
FIG. 3 is a timing chart showing a band allocation method for use in packet communication according to a second embodiment of the present invention.
FIG. 4 is a timing chart showing a band allocation method for use in packet communication according to a third embodiment of the present invention.
FIG. 5 is a timing chart showing a band allocation method for use in packet communication according to a fourth embodiment of the present invention.
FIG. 6 is a timing chart showing a band allocation method for use in packet communication according to a fifth embodiment of the present invention.
FIG. 7 is a timing chart showing a band allocation method for use in packet communication according to a prior art.

### DESCRIPTION OF REFERENCE SYMBOLS

- 1: RTT measurement command signal,
- 2: RTT response command signal,
- 3: Content data,
- 4: Beacon signal,
- Tbeacon: Time cycle of beacon signal,
- 10, 20: Source device,
- 12, 22: Audio and visual reproducing device,
- 13, 23: Packet processing circuit,
- 13m, 23m, 34m: Buffer memory,
- 14, 24: Wireless transceiver circuit,
- 15, 25: Antenna,
- 30: Sink device,
- 31: Controller,
- 32: Antenna,
- 33: Wireless transceiver circuit,
- 34: Packet processing circuit,
- 35: Audio and visual processing circuit,
- 36: Display with loudspeaker,
- Tcontent: Reservation period for content data,
- Tsource: Reservation period for RTT measurement command signal,
- Tsink: Reservation period for RTT response command signal, and
- Trandom: Contention period.

### BEST MODE FOR CARRYING OUT THE INVENTION

Embodiments of the present invention will be described hereinafter with reference to the drawings. In the embodiments, components similar to each other are denoted by the same reference numerals.

### FIRST EMBODIMENT

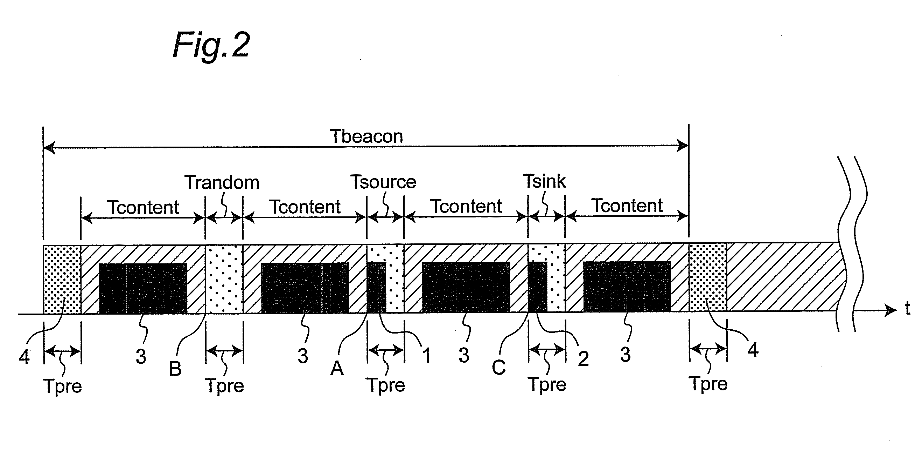

FIG. 1 is a block diagram showing a configuration of a wireless communication system for transmitting a wireless signal including AV stream data using a band allocation method for use in packet communication according to a first embodiment of the present invention. FIG. 2 is a timing chart showing the band allocation method for use in the packet communication according to the first embodiment. It is to be noted that the configuration of the wireless communication system shown in FIG. 1 is applied to first to fifth embodiments.

The band allocation method for use in the packet communication and a communication system using the method according to the first embodiment are characterized as follows. When the source device 10 measures a packet round trip time RTT from the source device 10 to a sink device 30, the source device 10 transmits a band request command for requesting allocation of bands for round trip packets to a band management unit 37 of a wireless communication system provided in a controller 31 of the sink device 30. Using a beacon signal 4, the band management unit 37 notifies a reservation period Tsource for transmitting an RTT measurement command signal from the source device 10 to the sink device 30, and a reservation period Tsink for sending back a packet including an RTT response command signal from the sink device 30 to the source device 10. In this case, the band management unit 37 allocates the reservation period Tsource for the RTT measurement command signal within a predetermined time period Tpre starting from a middle timing A of a time cycle Tbeacon of the beacon signal 4, and allocates the reservation period Tsink for the RTT response command signal within a predetermined time period Tpre starting from a third-fourths timing C of the time cycle Tbeacon of the beacon signal 4.

Referring to FIG 1, there will be described a configuration of the wireless communication system including the source devices 10 and 20, and the sink device 30 connected to each other via a wireless communication line of a wireless network, and an operation of the wireless communication system.

Referring to FIG. 1, the source device 10 is configured to include an audio and visual reproducing device 12, a packet processing circuit 13 having a buffer memory 13m, a wireless transceiver circuit 14, a controller 11 for controlling operations of these devices or circuits 12 to 14, and an antenna 15. The audio and visual reproducing device 12, which is, for example, a DVD player, reproduces video and audio data from a recording medium such as a DVD, and outputs the reproduced data to the packet processing circuit 13. The packet processing circuit 13 converts the inputted video and audio data and control commands inputted from the controller 11 into a digital signal in a predetermined packet format, and outputs the digital signal to the wireless transceiver circuit 14 via the buffer memory 13m. The wireless transceiver circuit 14 digitally modulates a wireless carrier signal according to the inputted digital signal, and wirelessly transmits the modulated wireless signal toward an antenna 32 of the sink device 30 via the antenna 15. The wireless signal transmitted from the sink device 30 is received by the antenna 15, and thereafter, it is inputted to the wireless transceiver circuit 14. The wireless transceiver circuit 14 demodulates the wireless signal into a digital signal, and outputs the digital signal to the packet processing circuit 13. The packet processing circuit 13 extracts only predetermined control commands from the inputted digital signal by a predetermined packet separation processing, and outputs the control commands to the controller 11 via the buffer memory 13m.

The source device 20 is configured to include an audio and visual reproducing device 22, a packet processing circuit 23 having a buffer memory 23m, a wireless transceiver circuit 24, a controller 21 for controlling operations performed by these devices or circuits 22 to 24, and an antenna 25. The source device 20 operates in a manner similar to that of the source device 10.

Further, the sink device 30 is configured to include the antenna 32, a wireless transceiver circuit 33, a packet processing circuit 34 having a buffer memory 34m, an audio and visual processing circuit 35, a display with loudspeaker 36, and the controller 31 for controlling operations of these circuits or the like 33 to 35. The controller 31 includes the band management unit 37 for managing bands used by the wireless network and signal transmission timing control. The processings performed by the band management unit 37 will be described later in detail. A wireless signal transmitted from the antenna 15 or 25 of the source device 10 or 20 is received by the antenna 32, and thereafter, inputted to the wireless transceiver circuit 33. The wireless transceiver circuit 33 demodulates the received wireless signal into a digital signal, and outputs the digital signal to the packet processing circuit 34. The packet processing circuit 34 extracts only video and audio data and predetermined control commands from the input digital signal by a predetermined packet separation processing. The packet processing circuit 34 outputs the former video and audio data to the audio and visual processing circuit 35 via the buffer memory 34m, and outputs the latter control commands to the controller 31. The audio and visual processing circuit 35 executes a predetermined signal processing on the inputted video and audio data, and outputs the resultant data to the display with loudspeaker 36 so as to display video and output audio. The controller 31 generates predetermined control commands, and outputs the control commands to the packet processing circuit 34. The packet processing circuit 34 converts the inputted control command into a digital signal in a predetermined packet format, and outputs the digital signal to the wireless transceiver circuit 33 via the buffer memory 34m. The wireless transceiver circuit 33 digitally modulates a wireless carrier signal according to the inputted digital signal, and wirelessly transmits the modulated wireless signal toward the antennas 15 and 25 of the source devices 10 and 20 via the antenna 32, respectively.

Referring to FIGS. 1 and 2, the band allocation method for use in the packet communication according to the first embodiment will be next described.

Referring to FIG. 2, 1 denotes the RTT measurement command signal transmitted from the source device to the sink device, 2 denotes the RTT response command signal sent back from the sink device to the source device, 3 denotes content data transmitted from the source device to the sink device, and 4 denotes the beacon signal transmitted from the band management unit 37 of the wireless network. In addition, Tcontent denotes a reservation period for the content data 3, Tsource denotes a reservation period for the RTT measurement command signal 1, Tsink denotes a reservation period for the RTT response command signal 2, and Trandom denotes a contention period.

First of all, the operation for transmitting the content data from the source device 10 to the sink device 30 will be described. It should be noted that the controllers 11, 21 and 31 controls the operations of the source devices 10 and 20 and the sink device 30, respectively, however, the descriptions of the controllers 11, 12 and 31 will be omitted herein. In order to request and reserve a band for transmitting the content data 3 to the sink device 30, the source device 10 transmits a band request command in the contention period Trandom, for which all of the devices 10, 20, and 30 in the wireless communication network can freely transmit data. In response to this, the band management unit 37 provided in the controller 31 of the sink device 30 (referred to as the band management unit 37 hereinafter) allocates the reservation periods Tcontent required to transmit the content data 3 from the source device 10 to the sink device 30. All of the devices in the wireless communication network are notified of a period designation command including the allocated reservation periods Tcontent for the content data by the beacon signal, which is periodically transmitted from the sink device 30 in the time cycle Tbeacon. In the reservation periods Tcontent, the data transmission from the devices including the sink device 30 and the source device 20 other than the source device 10 is prohibited. The content data reservation period Tcontent is allocated as follows. In the time cycle Tbeacon of the beacon signal 4, predetermined periods Tpre are previously set as blank time periods from the following timings, respectively:
(a) a middle timing A of the time cycle Tbeacon of the beacon signal 4;
(b) a quarter timing of the time cycle Tbeacon of the beacon signal 4 (a timing when a quarter of the time cycle Tbeacon passed since a start timing of the transmission of the beacon signal 4, and this timing will be referred to as a quarter timing B of the time cycle Tbeacon hereinafter); and
(c) A three-fourths timing of the time cycle Tbeacon of the beacon signal 4 (a timing when a three-fourths of the time cycle Tbeacon passed since the start timing of the transmission of the beacon signal 4, and this timing will be referred to as a three-fourths timing C of the time cycle Tbeacon hereinafter).
   In addition, a blank time period is previously provided for the time period for the transmission of the beacon signal 4. Then, the reservation periods Tcontent for the content data are allocated within the remaining time periods in the time cycle Tbeacon, respectively.

In this case, the contention period Trandom, for which all of the devices in the wireless communication network can freely transmit data, is allocated within the predetermined time period Tpre which starts from the quarter timing B of the time cycle Tbeacon of the beacon signal 4 (in this case, the predetermined time period Tpre is provided to transmit predetermined control commands, has a length shorter than that of the reservation period Tcontent for the content data and substantially equal to that of the time period for the transmission of the beacon signal 4, and is a time period in a unit of time about 1/20 to 1/100 of the entire content data reservation period Tcontent). In addition, the time cycle Tbeacon of the beacon signal 4 is set to, for example, 20 milliseconds, the reservation period Tsource for the RTT measurement command signal 1 is set to, for example, 200 microseconds, the reservation period Tsink for the RTT response command signal 2 is set to, for example, 200 microseconds, and the contention period Trandom is set to, for example, 300 microseconds.

Next, operation when the source device 20, which is a third party device different from the source device 10, measures the RTT will be described below.

In the contention period Trandom, upon measuring the RTT, in order to request allocation of the bands for the round trip packets to the band management unit 37 of the wireless communication system, the source device 20 transmits the band request command to the sink device 30. In response to this, the band management unit 37 notifies the following reservation periods using the beacon signal 4:
(a) The reservation period Tsource of the RTT measurement command signal 1 for transmitting an RTT measurement command packet from the source device 20 to the sink device 30, and
(b) The reservation period Tsink of the RTT response command signal 2 for sending back an RTT response command packet from the sink device 30 to the source device 20.
   In this case, the band management unit 37 performs the following:

(a) allocates the reservation period Tsource of the RTT measurement command signal 1 within the time period, which was previously retained when transmitting the content data 3, starts from the middle timing A of the time cycle Tbeacon of the beacon signal 4, and ends at a timing after a lapse of the predetermined time period Tpre, and
(b) allocates the reservation period Tsink of the RTT response command signal 2 within the time period, which was previously retained when transmitting the content data 3, starts from the three-fourths timing C of the time cycle Tbeacon of the beacon signal 4, and ends at a timing after a lapse of the predetermined time period Tpre.
   The source device 20 transmits the RTT measurement command signal 1 to the sink device 30 in the reservation period Tsource for the same signal. In response to this, the sink device 30 transmits the RTT response command signal 2 to the source device 20 in the reservation period Tsink for the same signal. Upon receiving the RTT response command signal 2 from the sink device 30, the source device 20 transmits a band release request command for requesting release of bands for the round trip packets to the band management unit 37 in the contention period Trandom. In response to this, using the beacon signal 4, the band management unit 37 notifies the release of the reservation period Tsource for transmitting the packet of the RTT measurement command signal 1 from the source device 20 to the sink device 30, and the release of the reservation period Tsink for sending back the packet of the RTT response command signal 2 from the sink device 30 to the source device 20.

As described above, the present embodiment is characterized as follows. When the packet round trip time RTT from the source device 10 to the sink device 30 is measured, the source device 10 transmits the allocation request command for requesting allocation of the bands for the round trip packets to the band management unit 37 of the wireless communication network. The band management unit 37 of the wireless communication network notifies the reservation period Tsource for transmitting a packet from the source device 10 to the sink device 30 and the reservation period Tsink for sending back a packet from the sink device 30 to the source device 10, using the beacon signal. In this case, the band management unit 37 allocates the reservation period Tsource within the time period starting from the middle timing A of the time cycle Tbeacon of the beacon signal 4, and allocates the reservation period Tsink within the time period starting from the middle timing between the reservation period Tsource and the beacon signal 4 right after the reservation period Tsource. Therefore, by arranging the contention period Trandom for transmitting the beacon signal 4, for which the streamed content data cannot be transmitted from the other source device 20 to the sink device 30, and the time periods Tsource and Tsink for RTT measurement at equal intervals in the entire band, it is possible to minimize a buffer capacity of the buffer memory 13m used for streaming transmission by the source device 10. In addition, it is possible to reduce probability of overflow or underflow of the streamed data in the buffer memory 13m or 23m. Further, the RTT response time can be reduced to about a quarter of the time cycle Tbeacon of the beacon signal 4.

### SECOND EMBODIMENT

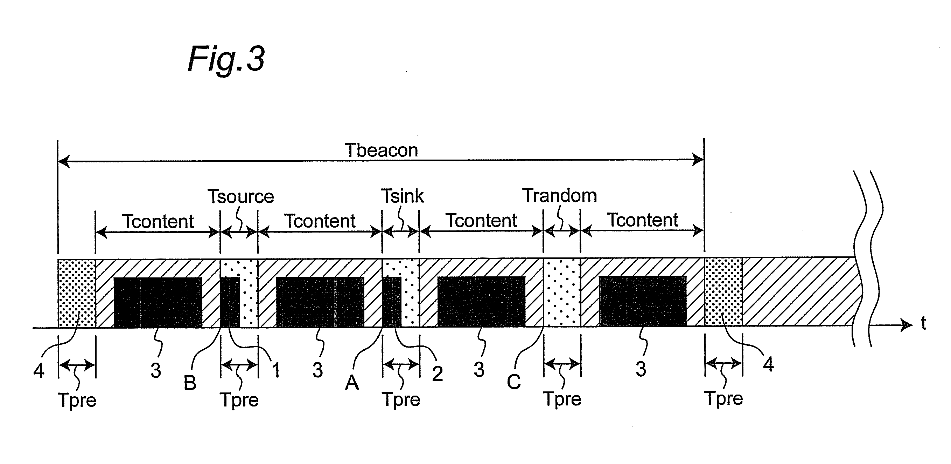

FIG. 3 is a timing chart showing a band allocation method for use in packet communication according to a second embodiment of the present invention. It is to be noted that the wireless communication system shown in FIG. 1 is used, and reference symbols similar to those shown in FIGS. 1 and 2 are used. The band allocation method for use in packet communication according to the second embodiment is different from the first embodiment in the following respects.
(1) The band management unit 37 allocates the reservation period Tsource of the RTT measurement command signal 1, instead of the contention period Trandom, within the time period which starts from the quarter timing B of the time cycle Tbeacon of the beacon signal 4 and ends after a lapse of the predetermined time period Tpre.
(2) The band management unit 37 allocates the reservation period Tsink of the RTT response command signal 2, instead of the reservation period Tsource of the RTT measurement command signal 1, within the time period which starts from the middle timing A of the time cycle Tbeacon of the beacon signal 4 and ends after a lapse of the predetermined time period Tpre.
(3) The band management unit 37 allocates the contention period Trandom, instead of the reservation period Tsink of the RTT response command signal 2, within the time period which starts from the three-fourths timing C of the time cycle Tbeacon of the beacon signal 4 and ends after a lapse of the predetermined time period Tpre.

Referring to FIG. 3, the packet communication band management method according to the second embodiment will be described below.

Content data reservation periods Tcontent for transmitting content data from the source device 10 to the sink device 30 are allocated in a manner similar to that of the first embodiment. In addition, the band management unit 37 allocates the other reservation periods as follows:
(1) The band management unit 37 allocates the reservation period Tsource of the RTT measurement command signal 1 within the time period which starts from the quarter timing B of the time cycle Tbeacon of the beacon signal 4 and ends after a lapse of the predetermined time period Tpre.
(2) The band management unit 37 allocates the reservation period Tsink of the RTT response command signal 2 within the time period which starts from the middle timing A of the time cycle Tbeacon of the beacon signal 4 and ends after a lapse of the predetermined time period Tpre.
(3) The band management unit 37 allocates the contention period Trandom within the time period which starts from the three-fourths timing C of the time cycle Tbeacon of the beacon signal 4 and ends after a lapse of the predetermined time period Tpre.

As described above, the present embodiment is characterized as follows. When the packet round trip time RTT from the source device 10 to the sink device 30 is measured, the source device 10 transmits the band request command for requesting allocation of the bands for the round trip packets to the band management unit 37 of the wireless communication network. The band management unit 37 of the wireless communication network notifies the reservation period Tsource for transmitting a packet from the source device 10 to the sink device 30 and the reservation period Tsink for sending back a packet from the sink device 30 to the source device 10, using the beacon signal 4. In this case, the band management unit 37 allocates the reservation period Tsink of the RTT response command signal 2 within the time period, which starts from the middle timing of the time cycle Tbeacon of the beacon signal 4 and ends after a lapse the predetermined time period Tpre, and allocates the reservation period Tsource of the RTT measurement command signal 1 within the time period starting from the middle timing between the time period Tsink and the beacon signal 4 right before the time period Tsink. Therefore, by arranging the contention period Trandom for transmitting the beacon signal 4, for which the streamed content data cannot be transmitted from the other source device 20 to the sink device 30, and the two time periods Tsource and Tsink for RTT measurement at equal intervals in the entire band, it is possible to minimize a buffer capacity of the buffer memory 13m used for streaming transmission by the source device 10. In addition, it is possible to reduce probability of overflow or underflow of the streamed data in the buffer memory 13m or 23m. Further, the RTT response time can be reduced to about a quarter of the time cycle Tbeacon of the beacon signal 4.

### THIRD EMBODIMENT

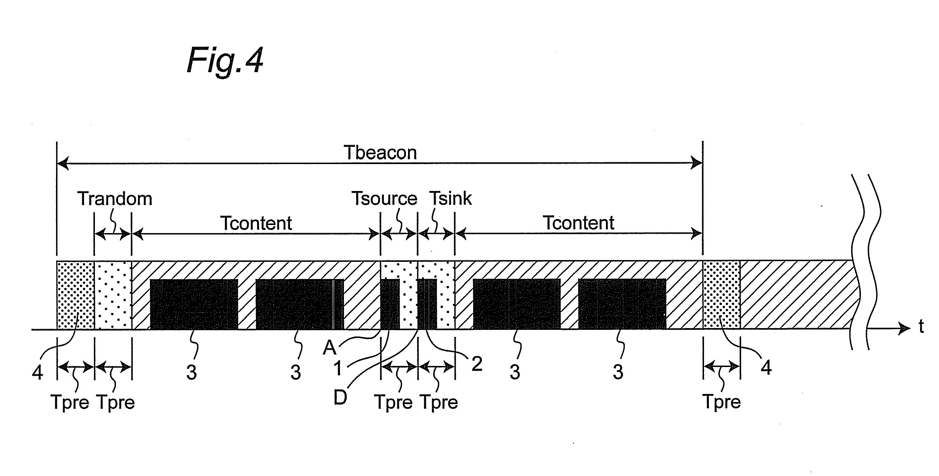

FIG. 4 is a timing chart showing a band allocation method for use in packet communication according to a third embodiment of the present invention. It is to be noted that the wireless communication system shown in FIG. 1 is used, and reference symbols similar to those shown in FIGS. 1 and 2 are used. The band allocation method for use in packet communication according to the third embodiment is different from the first embodiment in the following respects.
(1) The band management unit 37 allocates the contention period Trandom with a time period which starts from a timing right after the beacon signal 4 and ends at a timing after a lapse of the predetermined time period Tpre.
(2) The band management unit 37 allocates the reservation period Tsource of the RTT measurement command signal 1 within a time period which stars from the middle timing A of the time cycle Tbeacon of the beacon signal 4 and ends at a timing D after a lapse of the predetermined time period Tpre.
(3) The band management unit 37 allocates the reservation period Tsink of the RTT response command signal 2 within a time period which starts from the timing D and ends at a timing after a lapse of the predetermined time period Tpre.
(4) The band management unit 37 allocates the content data reservation periods Tcontent within a time period, which starts from an end timing of the contention period Trandom and ends at the middle timing A of the time cycle Tbeacon of the beacon signal 4, and a time period, which starts from an end timing of the reservation period Tsink and ends at an end timing of the time cycle Tbeacon of the beacon signal 4, respectively.

As described above, the present embodiment is characterized as follows. When the packet round trip time RTT from the source device 10 to the sink device 30 is measured, the source device 10 transmits the band allocation request command for requesting allocation of the bands for the round trip packets to the band management unit 37 of the wireless communication network. The band management unit 37 of the wireless communication network notifies the reservation period Tsource for transmitting a packet from the source device 10 to the sink device 30 and the reservation period Tsink for sending back a packet from the sink device 30 to the source device 10, using the beacon signal 4. In this case, the band management unit 37 allocates the reservation period Tsource within the time period which starts from the middle timing A of the time cycle Tbeacon of the beacon signal 4 and ends at the timing D after a lapse of the predetermined time period Tpre, and allocates the reservation period Tsink subsequent to the reservation period Tsource. Therefore, by arranging the contention period Trandom for transmitting the beacon signal 4, for which the streamed content data cannot be transmitted from the other source device 20 to the sink device 30, and the two reservation periods Tsource and Tsink for RTT measurement at equal intervals in the entire band, it is possible to minimize a buffer capacity of the buffer memory 13m used for streaming transmission by the source device 10. In addition, it is possible to reduce probability of overflow or underflow of the streamed data in the buffer memory 13m or 23m. Further, the RTT response time can be minimized.

### FOURTH EMBODIMENT

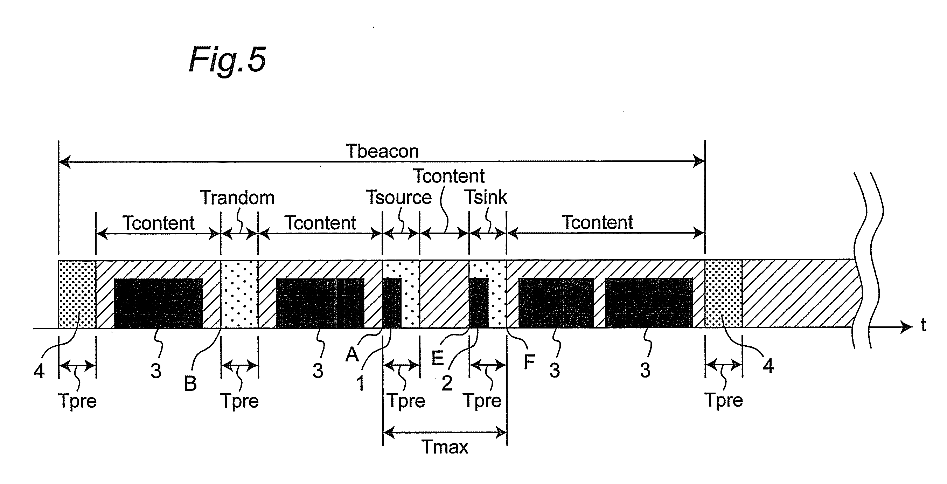

FIG. 5 is a timing chart showing a band allocation method for use in packet communication according to a fourth embodiment of the present invention. It is to be noted that the wireless communication system shown in FIG. 1 is used, and reference symbols similar to those shown in FIGS. 1 and 2 are used. The band allocation method for use in packet communication according to the fourth embodiment is different from the first embodiment in the following respects:
(1) The band management unit 37 allocates the reservation period Tsink of the RTT response command signal 2 within a time period which starts from a timing E and ends at a timing F. In this case, the timing F is a timing after a lapse of maximum time Tmax of a time limit defined according to a content protection standard (for example, the DTCP) from the middle timing A of the time cycle Tbeacon of the beacon signal 4. The timing E is a timing prior to the timing F by the predetermined time period Tpre. Namely, the reservation period Tsink is allocated within the time period Tpre prior to the timing F, namely, the time period located at an end of the maximum time Tmax of the time limit.
(2) The band management unit 37 allocates the content data reservation periods Tcontent within a time period, which starts from an end timing of the reservation period Tsource and ends at the timing E, and a time period, which starts from an end timing of the reservation period Tsink and ends at an end timing of the time cycle Tbeacon of the beacon signal 4, respectively.

As described above, the present embodiment is characterized as follows. When the packet round trip time RTT from the source device 10 to the sink device 30 is measured, the source device 10 transmits the band request command for requesting allocation of the bands for the round trip packets to the band management unit 37 of the wireless communication network. The band management unit 37 of the wireless communication network notifies the reservation period Tsource for transmitting a packet from the source device 10 to the sink device 30 and the reservation period Tsink for sending back a packet from the sink device 30 to the source device 10, using the beacon signal 4. In this case, the band management unit 37 allocates the reservation period Tsource within the time period which starts from the middle timing of the time cycle Tbeacon of the beacon signal 4, and allocates the reservation period Tsink within a time period located at the end of the time period, which starts from the start timing A of the reservation period Tsource and ends at the timing after a lapse of the maximum time Tmax of the time limit defined according to the content protection standard. Therefore, by arranging the contention period Trandom, for which the streamed content data cannot be transmitted from the other source device 20 to the sink device 30, the time period for transmitting the beacon signal 4, and the reservation period Tsink which is one of the two reservation periods for RTT measurement at equal intervals in the entire band, it is possible to reduce a buffer capacity of the buffer memory 13m used for streaming transmission by the source device 10. In addition, it is possible to reduce probability of overflow or underflow of the streamed data in the buffer memory 13m or 23m. Further, it is possible to make the RTT response time a value within the time limit defined according to the content protection standard.

### FIFTH EMBODIMENT

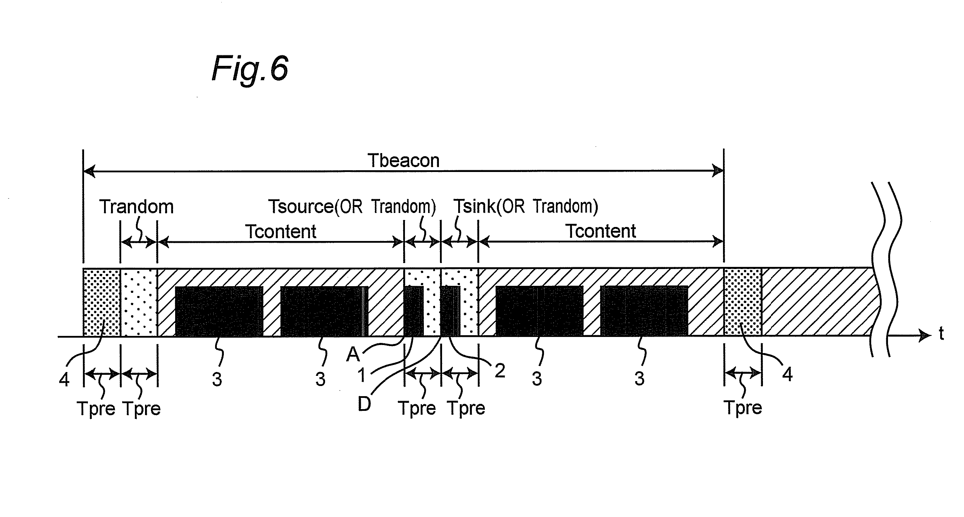

FIG. 6 is a timing chart showing a band allocation method for use in packet communication according to a fifth embodiment of the present invention. It is to be noted that the wireless communication system shown in FIG. 1 is used, and reference symbols similar to those shown in FIGS. 1 and 2 are used. The band allocation method for use in packet communication according to the fifth embodiment is different from the third embodiment in the following respects.
(1) The reservation period Tsource or Tsink is also usable as the contention period Trandom.

Referring to FIGS. 1 and 6, an operation for transmitting the content data from the source device 10 to the sink device 30 will first be described.

The source device 10 transmits a band request command for requesting reservation of a band for transmitting the content data 3 to the sink device 30 using (a) a contention period Trandom, for which all of the devices in the wireless communication network can freely transmit data, or (b) a contention period Trandom which is the same as the reservation period Tsink. In response to this, the band management unit 37 of the wireless communication network allocates reservation periods Tcontent required for transmitting the content data 3 from the source device 10 to the sink device 30. In this case, the reservation periods Tcontent are notified to all of the devices in the wireless communication network by the beacon signal 4 having the time cycle Tbeacon, and data transmission from the other devices including the sink device 30 is prohibited.

Next, operation for measuring RTT by the source device 20 will be described. In order to measure the RTT, the source device 20 transmits a band request command for requesting allocation of the bands for round trip packets to the band management unit 37 of the wireless communication network using the contention period Trandom or the contention period Trandom which is the same as the reservation period Tsink. In response to this, using the beacon signal 4, the band management unit 37 of the wireless communication network notifies the source device 20 of the reservation period Tsource of the RTT measurement command signal 1 for transmitting a packet from the source device 20 to the sink device 30 and the reservation period Tsink of the RTT response command signal 2 for sending back a packet from the sink device 30 to the source device 20. In this case, the reservation period Tsource is allocated within a time period between the timings A and D, and the reservation period Tsink is allocated within a time period right after the allocated reservation period Tsource (namely, the time period which starts from the timing D and ends at a timing after a lapse of the predetermined time period Tpre). The source device 20 transmits the RTT measurement command signal 1 to the sink device 30 in the reservation period Tsource, and the sink device 30 transmits the RTT response command signal 2 to the source device 20 in the reservation period Tsink. Upon receiving the RTT response command signal 2 from the sink device 30, the source device 20 transmits a band release request command for requesting release of the bands for the round trip packets to the band management unit 37 of the wireless communication network using the contention period Trandom. The band management unit 37 of the wireless communication network notifies the release of the reservation period Tsource for transmitting the packet from the source device 20, and the release of the reservation period Tsink for sending back the packet from the sink device 30, using the beacon signal 4. The time period for which the reservation period Tsink is released returns to the contention period Trandom.

As described above, the present embodiment is characterized as follows. When the packet round trip time RTT from the source device 20 to the sink device 30 is measured, the source device 20 transmits the band request command for requesting allocation of the bands for the round trip packets to the band management unit 37 of the wireless communication network. The band management unit 37 of the wireless communication network notifies the reservation period Tsource for transmitting a packet from the source device 20 to the sink device 30 and the reservation period Tsink for sending back a packet from the sink device 30 to the source device 20, using the beacon signal 4. In this case, the band management unit 37 of the wireless communication network allocates the reservation period Tsource within the time period which starts from the middle timing A of the time cycle Tbeacon of the beacon signal 4, and allocates the reservation period Tsink within the time period subsequent to the reservation period Tsource. When the bands for the round trip packets are not allocated, each of the reservation periods Tsource and Tsink can be the contention period Trandom for which a plurality of devices in the wireless communication network can freely communicate with each other. Therefore, by arranging the contention period Trandom for transmitting the beacon signal 4, for which the streamed content data cannot be transmitted from the other source device 20 to the sink device 30, and the two reservation periods Tsource and Tsink for RTT measurement at equal intervals in the entire band, it is possible to reduce a buffer capacity of the buffer memory 13m used for streaming transmission by the source device 10. In addition, it is possible to reduce probability of overflow or underflow of the streamed data in the buffer memory 13m or 23m. Further, the RTT response time can be minimized, and, when the bands for the round trip packets for the RTT measurement are not allocated, the system can efficiently operate by using the bands as the contention periods.

### MODIFIED EMBODIMENTS

In the above mentioned fifth embodiment, when the reservation period Tsource or Tsink is not reserved, the reservation period Tsource or Tsink is set to the contention period Trandom. In a manner similar to this, in the first to fourth embodiments, when the reservation period Tsource or Tsink is not reserved, the reservation period Tsource or Tsink may be set to the contention period Trandom, and may be returned to the original after use.

In the embodiments mentioned above, the band management unit 37 of the wireless communication network of the wireless communication system is provided in the controller 31 of the sink device 30. However, the present invention is not limited to this, and the band management unit 37 of the wireless communication network may be provided in any one of the devices in the wireless communication network.

In the embodiments mentioned above, the middle timing A of the time cycle Tbeacon of the beacon signal 4 is not required to be accurate. The present invention is not limited to this, and the middle timing A may be almost the middle timing of the time cycle Tbeacon of the beacon signal 4 (namely, the timing which is substantially the middle timing).

In the embodiments mentioned above, the quarter timing B and the three-fourths timing C of the time cycle Tbeacon of the beacon signal 4 are not required to be accurate. The present invention is not limited to this, and the quarter timing B and the three-fourths timing C may be almost the quarter timing B and the three-fourths timing C of the time cycle Tbeacon of the beacon signal 4 (namely, the timings that are substantially the quarter timing B and the three-fourths timing C), respectively.

### INDUSTRIAL APPLICABILITY

As described above in detail, according to the band allocation method for use in the packet communication and the communication method using the method according to the present invention, the reservation period Tsource for measuring the packet round trip time RTT is allocated within, for example, the predetermined time period from the middle timing of the time cycle Tbeacon of the beacon signal, and the reservation period Tsink is allocated at, for example, the middle timing between the reservation period Tsource and the beacon signal right after the reservation period Tsource. Therefore, even when a communication band for transmitting the content data from the source device to the sink device occupies a high proportion in the entire band, it is possible to lessen the influence on the streaming transmission of the content data and possible to reduce the RTT response time. In particular, the present invention can be used for RTT measurement in transmission of the contents which are required to be copyrighted.

## Claims

1. A band allocation method for use in packet communication in a communication system for transmitting contents from a source device to a sink device in a form of packets, the contents being required to be copyrighted,
wherein, when the source device measures a packet round trip time RTT from the source device to the sink device, the source device transmits a band allocation request signal for requesting allocation of bands for round trip packets to band management means of a network of the communication system;
wherein, using a beacon signal, the band management means of the network notifies a reservation period Tsource for transmitting a packet from the source device to the sink device and a reservation period Tsink for sending back a packet from the sink device to the source device; and
wherein the band management means of the network allocates the reservation period Tsource within a predetermined first time period allocated within a time cycle Tbeacon of the beacon signal.

2. The band allocation method for use in the packet communication as claimed in claim 1,
wherein the predetermined first time period is a predetermined time period starting from a middle timing of the time cycle Tbeacon of the beacon signal.

3. The band allocation method for use in the packet communication as claimed in claim 1 or 2,
wherein the band management means of the network allocates the reservation period Tsink within one of the following:
(a) a predetermined second time period starting from a middle timing between the middle timing of the time cycle Tbeacon of the beacon signal and an end timing of the time cycle of the beacon signal;
(b) a predetermined third time period subsequent to the first time period; and
(c) a predetermined fourth time period at an end of a time period, which starts from the first time period and ends after a lapse of a maximum time of a time limit defined by a content protection standard.

4. The band allocation method for use in the packet communication as claimed in claim 3,
wherein the band management means of the network allocates a contention period Trandom, for which a plurality of devices in the network can communicate freely with each other, within one of the following:
(a) a predetermined time period subsequent to the beacon signal;
(b) a predetermined fifth time period starting from a middle timing between the middle timing of the time cycle Tbeacon of the beacon signal and a start timing of the beacon signal; and
(c) the second time period within which the reservation period Tsource and the reservation period Tsink are not allocated.

5. The band allocation method for use in the packet communication as claimed in any one of claims 1 to 3,
wherein, when the bands for the round trip packets are not allocated, the band management means of the network allocates a contention period Trandom, for which a plurality of devices in the network can communicate freely with each other, within at least one of the reservation period Tsource and the reservation period Tsink.

6. A communication system for transmitting contents from a source device to a sink device in a form of packets, the contents being required to be copyrighted,
wherein, when the source device measures a packet round trip time RTT from the source device to the sink device, the source device transmits a band allocation request signal for requesting allocation of bands for round trip packets to a band management means of a network of the communication system,
wherein, using a beacon signal, the band management means of the network notifies a reservation period Tsource for transmitting a packet from the source device to the sink device and a reservation period Tsink for sending back a packet from the sink device to the source device; and
wherein the band management means of the network allocates the reservation period Tsource within a predetermined first time period within a time cycle Tbeacon of the beacon signal.

7. The communication system as claimed in claim 6,
wherein the predetermined first time period is a predetermined time period starting from a middle timing of the time cycle Tbeacon of the beacon signal.

8. The communication system as claimed in claim 6 or 7,
wherein the band management means of the network allocates the reservation period Tsink within one of the following:
(a) a predetermined second time period starting from a middle timing between the middle timing of the time cycle Tbeacon of the beacon signal and an end timing of the time cycle of the beacon signal;
(b) a predetermined third time period subsequent to the first time period; and
(c) a predetermined fourth time period at an end of a time period, which starts from the first time period and ends after a lapse of a maximum time of a time limit defined by a content protection standard.

9. The communication system as claimed in claim 8,
wherein the band management means of the network allocates a contention period Trandom, for which a plurality of devices in the network can communicate freely with each other, within one of the following:
(a) a predetermined time period subsequent to the beacon signal;
(b) a predetermined fifth time period starting from a middle timing between the middle timing of the time cycle Tbeacon of the beacon signal and a start timing of the beacon signal; and
(c) the second time period within which the reservation period Tsource and the reservation period Tsink are not allocated.

10. The communication system as claimed in any one of claims 6 to 8,
wherein, when the bands for the round trip packets are not allocated, the band management means of the network allocates a contention period Trandom, for which a plurality of devices in the network can communicate freely with each other, within at least one of the reservation period Tsource and the reservation period Tsink.
